# EUROPEAN PATENT SPECIFICATION

(11) **EP 2 500 585 B1**
(45) Date of publication and mention of the grant of the patent: **08.03.2017**
(21) Application number: 11165694.8
(22) Date of filing: 11.05.2011
(51) Int. Cl.: F16B 2/22, F16B 2/24, F16B 21/06, F16B 5/06, F16B 5/12

(54) **Retaining element for a detent lock between a housing and a covering element of a housing aperture**
Blockierelement für eine Rastsperre zwischen einem Gehäuse und einem Abdeckelement einer Gehäuseöffnung
Élément de rétention pour verrou à cliquet entre un boîtier et un élément de couverture d'ouverture de boîtier

(30) Priority: 15.03.2011 DE 102011013971
(43) Date of publication of application: 19.09.2012
(73) Proprietor: Johnson Controls Automotive Electronics GmbH, 75196 Remchingen (DE)
(72) Inventor: Bieletzki-Welz, Viktor, 42799, Leichlingen (DE); Kolimechkov, Georgi, 1582, Sofia (BG); Ivanov, Stoyan, 1715, Sofia (BG); Ohler, Jens, 75249, Kieselbronn (DE); Langer, Peter, 76137, Karlsruhe (DE); Noel, Christian, 95220, Herblay (FR)
(74) Representative: Liedtke, Markus

(56) References cited:
- DE-B3-102007 045 296
- GB-A- 2 209 368
- US-A- 4 180 247

## Description

The invention refers to an arrangement comprising a housing, a covering element of a housing aperture and a detent lock between the housing and the covering element.

Detent locks known in the art, e.g. detent locks of a covering element of a housing, are not additionally secured.

US 4,180,247 discloses a method and device for attaching chain link fabric to the framework of fences and other such enclosures. In particular, a method and device for holding chain link fabric to the outside face or surface of said framework is disclosed. The framework (end post, line post, top rail, and/or bottom rail) is provided with a plurality of slots in the sides of the members of the framework, into which special clips or retainers mesh by press-fit and hold the chain link fabric in place. The said clips or retainers being capable of providing a tight connection to maintain the interface between the chain link fabric and the framework member to which attached one tension on the chain link fabric to keep it taut has been established. Several types of clips are provided that may be used. The system is useable on a variety of framework member cross-sectional designs.

DE 10 2007 045 296 B3 discloses that in a device for attaching two attachment parts to a support part, an outer bracket and an inner bracket, blocking movement of the outer bracket are present. The brackets form a nested joined assembly which is insertable in a single insertion opening formed in the carrier part in order to hold an attachment part movable with respect to the carrier part as well as hold the further attachment part to the carrier part with a high pull-out force.

GB 2209368 A discloses a single-fin fastener comprising: a base member; a support board projecting from said base member; an engaging fin having a flexible hinging butt at a tip of said support board, said engaging fin extending from said flexible hinging butt in a direction reverse to that of the projection of said support board, said engaging fin including an engaging notched portion and a stopper extending from said engaging notched portion to the movable tip of said fin; opening preventing means for preventing said stopper from further opening, said opening preventing means being provided continuously to said base member and facing said stopper through a gap.

It is the object of the present invention to provide a retaining element for a detent lock between a housing and a covering element of a housing aperture which is improved with respect to the prior art.

The object is achieved by an arrangement according to claim 1. Advantageous embodiments are subject of the dependent claims.

According to the invention the objective is achieved by an arrangement comprising a housing, a covering element of a housing aperture and a detent lock between the housing and the covering element, the detent lock comprising a retaining element, wherein a detent element of the detent lock exhibits an essentially U-shaped cross section formed by two resiliently coupled legs, wherein the retaining element may be positively and/or non-positively locked in the area between the legs of the detent element and wherein the retaining element comprises a respective recess on two sides, wherein in each recess a lateral housing section may be positively and/or non-positively locked.

Due to the arrangement of the retaining element between the two legs of the detent element the legs are prevented from moving towards each other. Consequently, the detent lock with the arranged retaining element is prevented from being accidentally released, e.g. by vibration, centrifugal forces or other agitations.

A particular advantage is that the loss of the covering element of the housing aperture resulting from release of the detent lock is prevented.

According to the invention, the retaining element has two symmetrically arranged legs which are resiliently coupled to each other in a lower, rounded section, wherein the recesses are formed on outer faces of the legs corresponding to a wall thickness of the housing in the region of the lateral housing section.

End sections of the legs may be widened with respect to the remaining leg.

The end sections may have a surface structure on the outer face such as a surface wrinkling or a corrugation, thus increasing the grip and facilitating handling of the retaining element.

The lower, rounded section and adjacent lower regions of the legs may be shaped corresponding to the gap between the first leg and the second leg of the detent element.

The legs may be arranged to be moved towards each other by application of a force to the end sections.

According to the invention, the retaining element is applied to secure a detent lock between a housing and a covering element of a housing aperture, wherein the detent lock comprises a detent element exhibiting an essentially U-shaped cross section formed by two slewably or resiliently coupled legs, the detent element moulded in the covering element or integrally moulded with the covering element, wherein the detent element is arrangeable in a non-positively and/or positively locked manner in a rectangular clearance which extends the housing aperture. In order to avoid an accidental release of the detent lock in service the retaining element is inserted into the space provided between the first leg and the second leg of the detent element in a non-positive and/or positive locking manner thus preventing relative motion of the legs towards each other.

The shapes of the detent element and the rectangular clearance may correspond to each other.

According to the invention, the first leg is moulded in the covering element or integrally moulded with the covering element in a manner resulting in a material engagement of the two parts or a one-piece arrangement. At a free end of the second leg a latch may be formed at an outer face of the second leg pointing away from the first leg, wherein the latch may be arranged to engage in the region of a front face of the rectangular clearance beneath an edge, thus providing a releasable detent lock. In order to release this detent lock the second leg may be moved towards the first leg in such a manner that the latch is no longer arranged beneath the edge thereby releasing the detent lock.

In the following the invention is described in more detail with reference to the attached schematic figures, wherein
- Figure 1: is a schematic lateral view of a detent lock between a housing and a covering element of a housing aperture with a retaining element,
- Figure 2: is a schematic front view of a detent lock between a housing and a covering element of a housing aperture with a retaining element, and
- Figure 3: is a schematic perspective view of a retaining element.

Corresponding parts are marked with the same reference symbols in all figures.

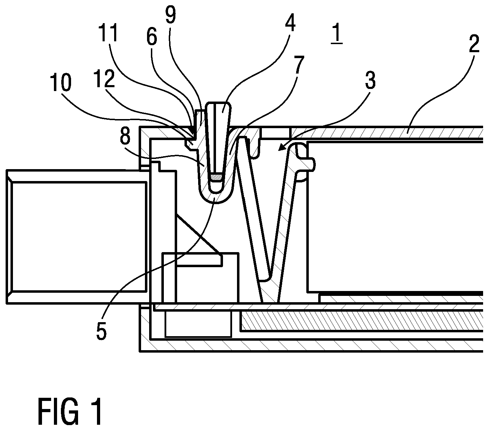

Figure 1 is a schematic lateral view of a detent lock between a housing 1 and a covering element 2 of a housing aperture 3 with a retaining element 4.

The housing 1 may be arranged as a conventional housing such as a housing of a remote control. At least one housing aperture 3 is arranged in the housing 1. The housing aperture 3 may be covered by the covering element 2 with positive locking.

At least one detent lock between the covering element 2 and the housing 1 may be established for mechanically coupling the covering element 2 with the housing 1. For establishing the detent lock a conventional detent element 5 is moulded in the covering element 2 or integrally moulded with the covering element 2, wherein the detent element 5 may be arranged in a non-positively and/or positively locked manner in a rectangular clearance 6 which extends the housing aperture 3. The shapes of the detent element 5 and the rectangular clearance 6 correspond to each other.

The detent element 5 exhibits an essentially U-shaped cross section formed from a first leg 7 and a second leg 8 which are resiliently or slewably mounted to each other. The first leg 7 is preferably moulded in the covering element 2 or integrally moulded with the covering element 2 in a manner resulting in a material engagement of the two parts or a one-piece arrangement. At the free end 9 of the second leg 8 a latch 10 is formed. The latch 10 is arranged at an outer face of the second leg 8 pointing away from the first leg 7. The latch 10 is arranged on the second leg 8 in such a manner that the latch 10 may be arranged in the region of a front face 11 of the rectangular clearance 6 beneath an edge 12, thus providing a releasable detent lock. In order to release this detent lock the second leg 8 may be moved towards the first leg 7 in such a manner that the latch 10 is no longer arranged beneath the edge 12 thereby releasing the detent lock.

In order to avoid an accidental release of the detent lock in service the retaining element 4 according to the invention is inserted into the space provided between the first leg 7 and the second leg 8 of the detent element 5 in a non-positive and/or positive locking manner thus preventing relative motion of the legs 7 and 8 towards each other.

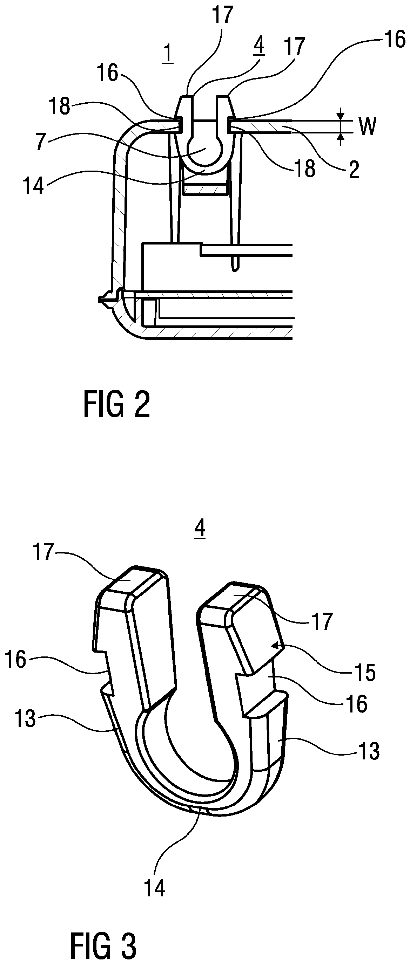

Figure 2 shows a schematic front view of the detent lock between the housing 1 and the covering element 2 of a housing aperture 3 with the retaining element 4.

Figure 3 is a schematic perspective view of the retaining element 4. The retaining element 4 comprises two symmetrically arranged legs 13 which are resiliently coupled to each other in a lower, rounded section 14. On the outer faces 15 of the legs 13 respective recesses 16 are formed corresponding to a wall thickness W of the housing 1 in the region of the rectangular clearance 6.

The end sections 17 of the legs 13 may be widened with respect to the remaining leg 13. In a particularly advantageous embodiment the end sections 17 may have a surface structure on the outer face 15, e.g. a surface wrinkling or a corrugation, thus increasing the grip and facilitating handling of the retaining element 4.

For securing the detent lock by means of the retaining element 4 the retaining element 4 is inserted into the gap in the detent element 5 between the first leg 7 and the second leg 8. For this purpose the section 14 and the lower regions of the legs 13 are shaped corresponding to the gap between the first leg 7 and the second leg 8 of the detent element 5. During the insertion the two legs 13 of the retaining element 4 are moved towards each other due to interaction of the lateral housing sections 18 of the rectangular clearance 6 until the recesses 16 are arranged in the region of the rectangular clearance 6. Between the recesses 16 of the retaining element 4 and the lateral housing sections 18 of the rectangular clearance 6 a respective detent lock is established, wherein the two legs 13 of the retaining element 4 move apart in such a manner that the lateral housing sections 18 of the rectangular clearance 6 are arranged in the recesses 16 of the retaining element 4 forming a non-positive and/or positive lock. For releasing this detent lock the legs 13 may be moved towards each other by application of a force to the end sections 17, thus releasing the detent lock between the recesses 16 of the retaining element 4 and the lateral housing sections 18 of the rectangular clearance 6 is released and the retaining element 4 may be removed from the gap between the first leg 7 and the second leg 8 of the detent element 5.

Due to the arrangement of the retaining element 4 between the two legs 7 and 8 of the detent element 5 the legs 7 and 8 are prevented from moving towards each other. Consequently, the detent lock with the arranged retaining element 4 is prevented from being accidentally released, e.g. by vibration, centrifugal forces or other agitations.

A particular advantage is that the loss of the covering element 2 of the housing aperture 3 resulting from release of the detent lock is prevented.

### List of References

- 1: housing
- 2: covering element
- 3: housing aperture
- 4: retaining element
- 5: detent element
- 6: rectangular clearance
- 7: first leg
- 8: second leg
- 9: free end
- 10: latch
- 11: front face
- 12: edge
- 13: leg
- 14: lower section
- 15: outer face
- 16: recess
- 17: end section
- 18: lateral housing section
- W: wall thickness

## Claims

1. Arrangement comprising a housing (1), a covering element (2) of a housing aperture (3) and a detent lock between the housing (1) and the covering element (2), the detent lock comprising a retaining element (4) and a detent element (5) exhibiting an essentially U-shaped cross section formed by two slewably or resiliently coupled legs (7, 8) and arranged to engage in the housing aperture (3), wherein the retaining element (4) is formed and arranged to be positively and/or non-positively locked in a gap between the legs (7, 8) of the detent element (5) in such a manner that the two legs (7, 8) of the detent element (5) are prevented from moving towards each other, the detent element (5) moulded in the covering element (2) or integrally moulded with the covering element (2), wherein the detent element (5) is arrangeable in a non-positively and/or positively locked manner in a rectangular clearance (6) which extends the housing aperture (3) and wherein the retaining element (4) comprises a respective recess (16) on two sides arranged for allowing a respective lateral housing section (18) next to the housing aperture (3) to positively and/or non-positively lock to the retaining element (4), wherein the retaining element (4) comprises two symmetrically arranged legs (13) which are resiliently coupled to each other in a lower, rounded section (14), wherein the recesses (16) are formed on outer faces (15) of the legs (13) corresponding to a wall thickness (W) of the housing (1) in the region of the lateral housing section (18).

2. Arrangement according to claim 1, **characterized in that** end sections (17) of the legs (13) are widened with respect to the remaining leg (13).

3. Arrangement according to claim 2, **characterized in that** the end sections (17) have a surface structure on the outer face (15).

4. Arrangement according to claim 3, **characterized in that** the surface structure is a surface wrinkling or a corrugation.

5. Arrangement according to one of the claims 1 to 4, **characterized in that** the lower, rounded section (14) and adjacent lower regions of the legs (13) are shaped corresponding to the gap between the first leg (7) and the second leg (8) of the detent element (5).

6. Arrangement according to one of the claims 1 to 5, **characterized in that** the legs (13) are arranged to be moved towards each other by application of a force to the end sections (17).

7. Arrangement according to one of the claims 1 to 6, **characterized in that** the shapes of the detent element (5) and the rectangular clearance (6) correspond to each other.

8. Arrangement according to one of the claims 1 to 7, **characterized in that** the first leg (7) is moulded in the covering element (2) or integrally moulded with the covering element (2) wherein at a free end (9) of the second leg (8) a latch (10) is formed at an outer face (15) of the second leg (8) pointing away from the first leg (7), wherein the latch (10) is arranged to engage in the region of a front face (11) of the rectangular clearance (6) beneath an edge (12), wherein the detent lock is arranged to be released by moving the second leg (8) towards the first leg (7) in such a manner that the latch (10) is no longer arranged beneath the edge (12).

## Patentansprüche

1. Anordnung, die ein Gehäuse (1), ein Abdeckungselement (2) einer Gehäuseöffnung (3) und eine Rastsperre zwischen dem Gehäuse (1) und dem Abdeckungselement (2) umfasst, wobei die Rastsperre ein Rückhalteelement (4) umfasst und ein Rastelement (5), das einen um Wesentlichen U-förmigen Querschnitt aufweist, der durch zwei schwenkbar oder federn verbundene Beine (7,8) geformt wird, und so angeordnet ist, dass es in die Gehäuseöffnung (3) eingreift, wobei das Rückhalteelement (4) so geformt und angeordnet ist, dass es in eine Lücke in den Beinen (7, 8) des Rastelements (5) derart formschlüssig und/oder kraftschlüssig einrastet, dass die beiden Beine (7, 8) des Rastelements (5) daran gehindert werden, sich aufeinander hin zu bewegen, wobei das Rastelement (5) in das Abdeckungselement (2) eingeformt ist oder einstückig mit dem Abdeckungselement (2) geformt ist, wobei das Rastelement (5) auf formschlüssig und/oder kraftschlüssig eingerastete Weise in einer rechteckigen Aussparung (6) angeordnet werden kann, welche die Gehäuseöffnung (3) erweitert und wobei das Rückhalteelement (4) eine entsprechende Vertiefung (16) auf beiden Seiten umfasst, die so angeordnet ist, dass ein formschlüssiges und/oder kraftschlüssiges Einrasten eines entsprechenden seitlichen Gehäuseabschnitts (18) neben der Gehäuseöffnung (3) mit dem Rückhalteelement (4) möglich ist, wobei das Rückhalteelement (4) zwei symmetrisch angeordnete Beine (13) umfasst, die in einem unteren, abgerundeten Abschnitt (14) federn miteinander verbunden sind, wobei die Vertiefungen (16) auf Außenflächen (15) der Beine (13) geformt werden, die einer Wanddicke (W) des Gehäuses (1) im Bereich des seitlichen Gehäuseabschnitts (18) entsprechen.

2. Anordnung nach Anspruch 1, **dadurch gekennzeichnet, dass** Endabschnitte (17) der Beine (13) in Bezug auf das übrige Bein (13) verbreitert sind.

3. Anordnung nach Anspruch 2, **dadurch gekennzeichnet, dass** die Endabschnitte (17) auf der Außenseite (15) eine Oberflächenstruktur aufweisen.

4. Anordnung nach Anspruch 3, **dadurch gekennzeichnet, dass** die Oberflächenstruktur eine Oberflächenfältelung oder eine Furche ist.

5. Anordnung nach einem der Ansprüche 1 bis 4, **dadurch gekennzeichnet, dass** der untere, abgerundete Abschnitt (14) und die angrenzenden unteren Abschnitte der Beine (13) entsprechend der Lücke zwischen dem ersten Bein (7) und dem zweiten Bein (8) des Rastelements (5) geformt sind.

6. Anordnung nach einem der Ansprüche 1 bis 5, **dadurch gekennzeichnet, dass** die Beine (13) so angeordnet sind, das sie durch Anwendung eines Drucks an den Endabschnitten (17) aufeinander zu bewegt werden können.

7. Anordnung nach einem der Ansprüche 1 bis 6, **dadurch gekennzeichnet, dass** die Formen des Rastelements (5) und der rechteckigen Aussparung (6) einander entsprechen.

8. Anordnung nach einem der Ansprüche 1 bis 7, **dadurch gekennzeichnet, dass** das erste Bein (7) in das Abdeckungselement (2) eingeformt ist oder einstückig mit dem Abdeckungselement (2) geformt ist, wobei an einem freien Ende (9) des zweiten Beins (8) eine Rastnase (10) an einer Außenfläche (15) des zweiten Beins (8), die von dem ersten Bein (7) abgewandt ist, geformt ist, wobei die Rastnase (10) so angeordnet ist, dass sie in den Bereich einer Vorderfläche (11) der rechteckigen Aussparung (6) unterhalb einer Kante (12) einrasten kann, wobei die Rastsperre so angeordnet ist, dass sie gelöst wird indem das zweite Bein (8) in Richtung des ersten Beins (7) auf eine solche Weise bewegt wird, dass die Rastnase (10) nicht mehr unterhalb der Kante (12) angeordnet ist.

## Revendications

1. Système comprenant un logement (1), un élément de couverture (2) d'une ouverture de logement (3) et un dispositif de blocage par arrêt entre le logement (1) et l'élément de couverture (2), le dispositif de blocage par arrêt comprenant un élément de retenue (4) et un élément d'arrêt (5) présentant une section transversale essentiellement en forme de U formée par deux branches (7, 8) accouplées de manière pivotante ou élastique et conçues pour se loger dans l'ouverture de logement (3), l'élément de retenue (4) étant formé et conçu pour être bloqué par accouplement géométrique et/ou accouplement par friction dans un espace entre les branches (7, 8) de l'élément d'arrêt (5) de telle sorte que les deux branches (7, 8) de l'élément d'arrêt (5) ne soient pas en mesure de se déplacer l'une vers l'autre, l'élément d'arrêt (5) étant moulé dans l'élément de couverture (2) ou étant moulé d'un seul tenant avec l'élément de couverture (2), l'élément d'arrêt (5) pouvant être disposé de façon à être bloqué par accouplement par friction et/ou accouplement géométrique dans un intervalle rectangulaire (6) qui prolonge l'ouverture de logement (3) et l'élément de retenue (4) comprenant un évidement respectif (16) sur deux côtés conçu pour permettre à une section de logement latérale (18) respective située à côté de l'ouverture de logement (3) de se bloquer par accouplement géométrique et/ou accouplement par friction sur l'élément de retenue (4), l'élément de retenue (4) comprenant deux branches (13) disposées symétriquement qui sont accouplées l'une avec l'autre de manière élastique au niveau d'une section inférieure arrondie (14), les évidements (16) étant formés sur des faces extérieures (15) des branches (13) correspondant à une épaisseur de paroi (W) du logement (1) dans la région de la section de logement latérale (18).

2. Système selon la revendication 1, **caractérisé en ce que** des sections d'extrémité (17) des branches (13) sont élargies par rapport au reste de la branche (13).

3. Système selon la revendication 2, **caractérisé en ce que** les sections d'extrémité (17) comportent une structure de surface sur la face extérieure (15).

4. Système selon la revendication 3, **caractérisé en ce que** la structure de surface est un plissement de surface ou des ondulations.

5. Système selon l'une des revendications 1 à 4, **caractérisé en ce que** la section inférieure arrondie (14) et les régions inférieures adjacentes des branches (13) présentent une forme correspondant à l'espace entre la première branche (7) et la seconde branche (8) de l'élément d'arrêt (5).

6. Système selon l'une des revendications 1 à 5, **caractérisé en ce que** les branches (13) sont conçues pour être déplacées l'une vers l'autre par application d'une force aux sections d'extrémité (17).

7. Système selon l'une des revendications 1 à 6, **caractérisé en ce que** les formes de l'élément d'arrêt (5) et de l'intervalle rectangulaire (6) se correspondent.

8. Système selon l'une des revendications 1 à 7, **caractérisé en ce que** la première branche (7) est moulée dans l'élément de couverture (2) ou est moulée d'un seul tenant avec l'élément de couverture (2), un élément de verrouillage (10) étant formé, au niveau d'une extrémité libre (9) de la seconde branche (8), au niveau d'une face extérieure (15) de la seconde branche (8), dans une orientation s'éloignant de la première branche (7), l'élément de verrouillage (10) étant conçu pour se loger, dans la région d'une face avant (11) de l'intervalle rectangulaire (6), sous un bord (12), le dispositif de blocage par arrêt étant conçu pour être libéré par déplacement de la seconde branche (8) en direction de la première branche (7) de telle sorte que l'élément de verrouillage (10) ne soit plus disposé sous le bord (12).
